# EUROPÄISCHE PATENTSCHRIFT

(11) **EP 0 520 167 B1**
(45) Veröffentlichungstag und Bekanntmachung des Hinweises auf die Patenterteilung: **24.08.1994**
(21) Anmeldenummer: 92107726.9
(22) Anmeldetag: 07.05.1992
(51) Int. Cl.: B60R 13/02, B62D 31/02

(54) **Verkleidung für eine Fenster- oder Türsäule eines Kraftfahrzeuges**
Lining for a window or door column of a motor vehicle
Revêtement pour un montant de fenêtre ou de porte d'un véhicule à moteur

(30) Priorität: 26.06.1991 DE 4121013
(43) Veröffentlichungstag der Anmeldung: 30.12.1992
(73) Patentinhaber: MERCEDES-BENZ AG, 70327 Stuttgart (DE)
(72) Erfinder: Kalt, Hans-Peter, W-7036 Schönaich (DE); Reder, Friedrich, W-7033 Herrenberg 3 (DE); Füki, Josef, W-7030 Böblingen (DE)

(56) Entgegenhaltungen:
- DE-A- 3 731 493
- DE-U- 7 704 391

## Beschreibung

Die Erfindung betrifft eine Verkleidung für eine Fenster- oder Türsäule eines Kraftfahrzeuges, insbesondere eines Omnibusses, bestehend aus einer im wesentlichen U-förmigen Profilleiste, die mit ihren beiden Schenkeln die Fenster- oder Türsäule seitlich einfaßt und an diesen Schenkein mit Führungsnuten zur Aufnahme der seitlichen Ränder eines Rollos versehen ist.

Es ist eine Stützenverkleidung dieser Art bekannt (DE-U-77 04 391), bei der die Profilleiste aus zwei Teilen besteht.Der eine Teil bildet das eigentliche U-Profil und ist so profiliert, daß er seitliche Nuten für die Ränder des Rollos bildet. Auf dieses erste Profilteil, das mit der Kraftfahrzeugsäule verschraubt wird, wird eine Blendleiste aufgeklipst, die auch die Schraubstellen überdeckt.

Der Erfindung liegt die Aufgabe zugrunde, eine Verkleidung der eingangs genannten Art zu vereinfachen.

Zur Lösung wird vorgesehen, daß die Führungsnuten in U-förmigen Führungsschienen angebracht sind, die in eine einstückige, mit einer die Außenkontur festlegenden Kunststoffolie umkleidete und mit einem Kunststoffschaum ausgefüllte Profilleiste als Einlageteile mit eingeschäumt sind. Durch diese Ausgestaltung bildet die Profilverkleidungsleiste ein einheitliches Teil, das nicht in zwei getrennten Montagevorgängen angebracht werden muß. Die neue Verkleidungsleiste weist auch den Vorteil einer einfachen Herstellung auf und den Vorteil, daß sie wegen der Verwendung von Kunststoffschaum auch Verletzungen der Insassen bei einem Aufprall auf die Tür- oder Fenstersäule abmildern kann.

In vorteilhafter Weiterbildung des Gegenstandes der Erfindung können in den zwischen den Schenkeln verlaufenden mittleren Stegbereich der Kunststoffschaumfolie Aufnahmehalter für Federbefestigungsklipse mit eingeschäumt sein.Die neue Verkleidungsleiste kann daher auch in einfacher Weise mit einer sogenannten Handballenmontage angebracht werden, wobei die Federklipse in zugeordnete Befestigungslöcher in der Kraftfahrzeugsäule einschnappen.

Um einen guten Halt der Aufnahmehalter und der Federbefestigungsklipse an der ausgeschäumten Profilleiste zu bewirken, können die Aufnahmehalter mit etwa parallel zu dem Stegbereich verlaufenden Metallplatten versehen sein, in denen die Befestigungsklipse gehalten sind. Schließlich kann in weiterer Fortbildung der Erfindungsidee in den zwischen den Schenkeln verlaufenden Stegbereich der Kunststoffschaumfolie Befestigungsstege zur Montage von Zusatzteilen, beispielsweise zum Anbringen von Kleiderhaken, ebenfalls mit eingeschäumt sein.

Die Erfindung ist anhand eines Ausführungsbeispiels in der Zeichnung dargestellt und wird im folgenden erläutert. Es zeigen:
- Fig. 1: eine schematische Seitenansicht einer erfindungsgemäßen Verkleidung der Fenstersäule eines Omnibusses,
- Fig. 2: eine vergrößerte Darstellung des Schnittes längs der Linie II-II durch die Fig. 1 und
- Fig. 3: eine vergrößerte Darstellung des Schnittes längs der Linie III-III durch die Verkleidung der Fig. 1.

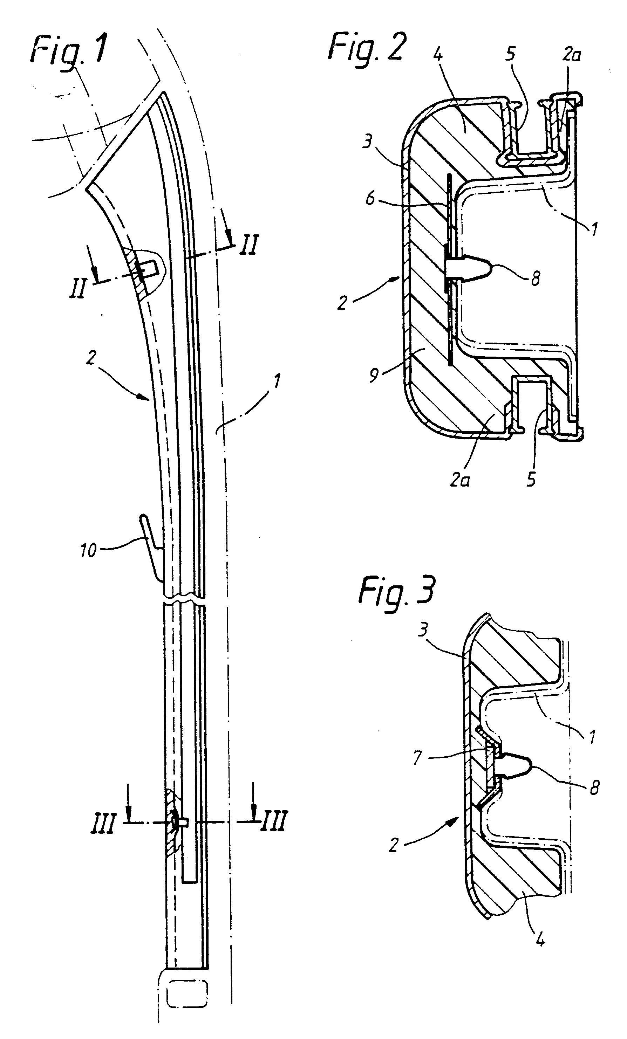

In der Fig.1 ist schematisch eine Fenstersäule (1) im Seitenbereich eines Omnibusses angedeutet, die mit einer benachbarten Fenstersäule ein Seitenfenster des Omnibusses seitlich einrahmt. Die Fenstersäule (1) geht oben in nicht näher dargestellter Weise in den Dachaufbau und auf ihrer Innenseite in die Decke des Omnibusses über.

Wie insbesondere aus der Fig.2 erkennbar ist, besitzt die Fenstersäule (1) einen etwa rechteckigen Querschnitt und sie ist von einer als Verkleidung dienenden Profilleiste (2) auf ihrer zum Fahrzeuginnenraum weisenden Seite umgeben. Diese Profilleiste (2) besteht aus einer die Außenkontur der Profilleiste (2) festlegenden Kunststoffolie (3), die innen mit einem Kunststoffschaum (4) zu ihrer Endform ausgeschäumt ist. Dies geschieht in bekannter Weise durch das Einlegen der Folie (3) in eine Werkzeugform. Als Kunststoff kann Polyvinylchlorid, Acrylbutadienstyrol oder Polypropylen verwendet werden.

Die Profilleiste (2) besitzt an ihren beiden, die Säule (1) einfassenden Schenkeln (2a) jeweils eine Führungsschiene (5) mit U-förmigem Profil, die als Führung für den seitlichen Rand eines Rollos dient, das auf die Innenseite vor das nicht gezeigte Fenster gezogen werden kann. Diese beiden Führungsschienen (5) sind mit in die Profilleiste (2) eingeschäumt und werden zu diesem Zweck bei der Herstellung der Profilleiste (2) mit in das Werkzeug eingelegt. Die Profilleiste (2) ist daher einstückig ausgebildet.

Wie die Fig. 2 und 3 zeigen, ist in den Innenraum der Profilleiste (2), also im Bereich der Kunststoffausschäumung (4), auch noch eine Verankerung (6 bzw. 7) für Befestigungsfederklipse (8) untergebracht. Die Verankerung (6) besteht dabei im wesentlichen aus einem plattenförmigem Blechstreifen (6), der etwa parallel zu der Außenhaut (3) im Bereich des Steges (9) zwischen den beiden Schenkeln (2a) der Profilleiste (2) verläuft. In diesen Blechsteg (6) sind die Federbefestigungsklipse (8) eingesetzt, so daß sie mit ihrem Schnappteil frei in den von den Schenkeln (2a) engefaßten Raum der Profilleiste (2) hereinragen. Wie Fig. 2 zeigt, können die Federklipse auf diese Art durch einfachen Druck auf den Stegteil (9) der Profilleiste (2) (Handballenmontage) in entsprechende Öffnungen in der Fenstersäule (1) einschnappen.

In ähnlicher Weise sind auch im Bereich des Schnittes III-III, also im unteren Bereich der Fensteräule (1), Federbefestigungsklipse (8) an der Profilleiste (2) vorgesehen. Diese Federbefestigungsklipse (8) sitzen in Metallplatten (7), die so ausgebildet sind, daß sie in eine rinnenförmige Mittelausnehmung der Fenstersäule (1) hereinpassen, so daß eine formschlüssige Befestigung durch die Federbefestigungsklipse (8) an diesen Stellen nicht nur senkrecht zu der Längsrichtung der Fenstersäule (1), sondern auch in deren Querrichtung erreicht wird. Die Ausschäumung (4) ist, wie aus dem Vergleich von Fig. 2 und 3 deutlich wird, über die Länge der Profilleiste (2) unterschiedlich ausgebildet. Die Profilleiste (2) kann dadurch auch in gewisser Hinsicht unabhängig von dem Verlauf der Fenstersäule (1) ästhetisch gestaltet und geformt werden. Ihr Hauptvorteil ist es, daß sie nur einstückig ist und, wie vorher angedeutet, in einfacher Weise ohne Werkzeuge an der Fenstersäule (1) montiert werden kann.

Die Fig. 1 zeigt, daß auf ähnliche Weise, wie die Federbefestigungsklipse (8), auch andere Zusatzteile an der Profilleiste (2) vormontiert werden können, und zwar z.B. ein Kleiderhaken (10), dessen Befestigungsbasis auch in der ausgeschäumten Profilleiste (2) verankert werden kann. Möglich ist es auch, der Profilleiste (2) gewisse Verankerungsplatten, Streifen o.dgl. im Bereich des Steges zuzuordnen, die wahlweise mit entsprechenden Zubehörteilen von außen bestückt werden können, wenn dies erwünscht ist.

## Patentansprüche

1. Verkleidung für eine Fenster- oder Türsäule (1) eines Kraftfahrzeuges, insbesondere eines Omnibusses, bestehend aus einer im wesentlichen U-förmigen Profilleiste (2), die mit ihren beiden Schenkeln (2a) die Fenster- oder Türsäule (1) seitlich einfaßt und an diesen Schenkeln mit Führungsnuten (5) zur Aufnahme der seitlichen Ränder eines Rollos versehen ist,
**dadurch gekennzeichnet,**
daß die Führungsnuten (5) in U-förmigen Führungsschienen (5) angebracht sind, die in eine einstückige, mit einer die Außenkontur festlegenden Kunststoffolie (3) umkleidete und mit einem Kunststoffschaum (4) ausgefüllte Profilleiste (2) als Einlageteile mit eingeschäumt sind.

2. Verkleidung nach Anspruch 1,
**dadurch gekennzeichnet,**
daß in den zwischen den Schenkeln (2a) verlaufenden Stegbereich (9) der Profilleiste (2) Aufnahmehalter (6, 7) für Federbefestigungsklipse (8) mit eingeschäumt sind.

3. Verkleidung nach Anspruch 2,
**dadurch gekennzeichnet,**
daß die Aufnahmehalter (6, 7) mit etwa parallel zu dem Stegbereich (9) verlaufenden Metallplatten versehen sind, in denen die Befestigungsklipse (8) gehalten ist.

4. Verkleidung nach Anspruch 1,
**dadurch gekennzeichnet,**
daß in den zwischen den Schenkeln (2a) verlaufenden Stegbereich (9) der Kunststoffschaumfolie (2) Befestigungsstege zur Montage von Zusatzteilen (10) mit eingeschäumt sind.

## Claims

1. A casing for a window or door post (1) of a motor vehicle, particularly of a coach, consisting of a substantially channel-shaped profiled strip (2) which with its two arms (2a) laterally encompasses the window or door post (1) and is provided on these arms with guiding grooves (5) for receiving the side edges of a roller blind, characterized in that the guiding grooves (5) are provided in channel-shaped guide rails (5) which are foamed in as inserts into an integral profiled strip (2) coated with a plastic foil (3) defining the outer outline and filled with a plastic foam (4).

2. A casing according to claim 1, characterized in that receiving holding devices (6, 7) for spring securing clips (8) are co-foamed into the web area (9) of the profiled strip (2) extending between the arms (2a).

3. A casing according to claim 2, characterized in that the receiving holding devices (6, 7) are provided with metal plates extending substantially parallel to the web area (9) and in which the securing clips (8) are held.

4. A casing according to claim 1, characterized in that securing webs for mounting additional parts (10) are co-foamed into the web area (9) of the plastic foam foil (3) extending between the arms (2a).

## Revendications

1. Habillage pour un montant de fenêtre ou de porte (1) appartenant à un véhicule automobile, en particulier à un autocar, constitué par une moulure profilée (2), sensiblement en forme de U, qui emboîte latéralement le montant de fenêtre ou de porte (1) par ses deux branches (2a), et est muni, le long de ces deux branches, de rainures de guidage (5) destinées à recevoir les bords latéraux d'un store roulant,
caractérisé
en ce que les rainures de guidage (5) sont formées dans des glissières de guidage (5) en forme de U qui sont noyées par moussage, sous la forme d'insertions, dans une moulure profilée (2) en une seule pièce, laquelle est recouverte d'une feuille de matière plastique (3) qui détermine le contour extérieur, et remplie d'une mousse de matière plastique (4).

2. Habillage selon la revendication 1, caractérisé
en ce que des renforts de fixation (6, 7) pour agrafes de fixation élastiques (8) sont noyés par moussage dans la région d'âme (9) de la moulure profilée (2), qui s'étend entre les branches (2a).

3. Habillage selon la revendication 2,
caractérisé
en ce que les renforts de fixation (6, 7) sont munis de plaquettes métalliques s'étendant à peu près parallèlement à la région d'âme (9), et dans lesquelles les agrafes de fixation (8) sont tenues.

4. Habillage selon la revendication 1,
caractérisé
en ce que des pattes de fixation destinées au montage d'accessoires (10) sont noyées par moussage dans la région d'âme (9) de la feuille de mousse de matière plastique (2), qui s'étend entre les branches (2a).
